# EUROPEAN PATENT SPECIFICATION

(11) **EP 2 776 635 B1**
(45) Date of publication and mention of the grant of the patent: **26.04.2017**
(21) Application number: 12788248.8
(22) Date of filing: 09.11.2012
(51) Int. Cl.: E02D 3/026, E02D 3/032

(54) **COMPACTOR MACHINE**
BODENVERDICHTER
COMPACTEUR DU SOL

(30) Priority: 11.11.2011 GB 201119513
(43) Date of publication of application: 17.09.2014
(73) Proprietor: Thomson, Brian M., Barnsley, South Yorkshire S72 0DE (GB)
(72) Inventor: LLOYD, David Roderick, Huddersfield Yorkshire HD8 9EJ (GB); KEATING, Alan, Barnsley South Yorkshire S72 0DE (GB)
(74) Representative: Worthington, Richard Easton
(86) International application number: PCT/GB2012/052788
(87) International publication number: WO 2013/068756

(56) References cited:
- WO-A1-2005/014938
- US-A- 3 318 209
- US-B1- 6 991 401

## Description

### FIELD OF THE INVENTION

The present invention relates to a compactor machine.

### BACKGROUND OF THE INVENTION

A compactor machine can be used to compact materials for example, but not limited to, refuse at a landfill site, or soil, gravel, etc. at a construction site.

A conventional compactor machine has wheels and/or rollers with a drum of constant outer diameter. The drum may have a smooth exterior or may have teeth (spikes, pads tips, etc.) extending therefrom. The teeth are often referred to as "sheep's feet" and aid in compression and traction due to the penetration of the smaller contacting area into the material.

A compactor machine is known from US3318209A.

### SUMMARY OF THE INVENTION

The present invention provides a compactor machine, comprising a plurality of rigid wheels or rollers mounted on axles, each wheel or roller including a rigid drum for contacting material to be compacted, the drum having a profiled outer surface including a first cylindrical portion and a second cylindrical portion, the first cylindrical portion having a larger rolling diameter than the second cylindrical portion, and an inclined portion extending between the first and second cylindrical portions, each wheel or roller including a rigid drum for contacting material to be compacted, the drum having a profiled outer surface including a first cylindrical portion and a second cylindrical portion the first cylindrical portion having a larger rolling diameter than the second cylindrical portion, and an inclined portion extending between the first and second cylindrical portions, wherein the largest diameters of the wheels or rollers mounted on adjacent axles spaced apart along the longitudinal direction of the compactor machine are diametrically overlapping.

The construction of the wheel/roller is such that the area of contact between the outer surface of the drum and refuse, soil or other material to be compacted varies with the depth of penetration of the wheel into the material. The different rolling diameters within the scope of one wheel gives different ground pressures. This means that the pressure applied to the material for compaction varies depending upon the depth of penetration of the wheel. The inventors of the present invention have found this to provide more efficient compaction of material. The inclined portion of the outer surface of the drum enables infinitely variable pressures. Varying the angle of inclination (with respect to the rotation axis of the wheel) of this inclined portion of the outer surface will have a further effect on the ground pressures which can be obtained. One benefit of this wheel/roller design is to allow improved go anywhere mobility - high floatation where needed changing to heavy ground pressure where conditions demand.

The construction of the wheel/roller also means that the appropriate pressure for a certain volume of material to be compacted is applied by the wheels, without the need to change the wheels.

Advantageously such overlap may be used to remove debris (e.g. refuse or soil) build-up from the wheels and therefore alleviates the need for a scraper system to clean the wheels as used on some vehicles of the prior art.

The angle of the inclined portion of the drum may be set at a range of angles, including but not limited to around 60° to 70° as measured from the wheel axis of rotation.

The wheel/roller preferably has a centre for coupling to an axle of the machine. The centre may be common among various wheel designs, which may include different drums. Alternatively, the wheel/roller has a centre for coupling to a specific machine to allow retro-market fitting of the wheel/roller to existing suitable machines.

The wheel/roller is preferably hollow and may define a sealable interior volume for filling with a ballast fluid. The ballast fluid may be used to alter the ground pressure of the wheel/roller as desired. The fluid preferably may be drained from the wheel when not required. The interior volume may be bounded by the drum and the centre of the wheel.

The wheel/roller may have a welded metallic construction. The metallic material is preferably steel. However, a variety of other metallic and non-metallic materials may alternatively be used, and other wheel construction techniques other than welding may similarly be used.

The outer surface of the drum may include a plurality of first and/or second cylindrical portions, with a respective inclined portion extending between each first and second cylindrical portions.

Optionally, the drum may have further cylindrical portions of a diameter different to the diameter of the first and second cylindrical portions.

The wheel/roller may include tips (teeth) extending substantially radially outwardly from the first cylindrical portion of the drum. In use, the tips knead material to be compacted, for example soil or refuse.

The tips may be permanently fixed to the-drum. Alternatively, the tips may be removably attached to the drum.

The wheel/roller may further comprise a cylindrical sleeve carrying the tips, wherein the sleeve is attached to the first cylindrical portion of the drum. The sleeve may be interchangeable upon the drum with another sleeve carrying tips selected according to the material to be compacted. The sleeve may comprise two or more sections (each defining a half-cylinder) which fit together to form the complete cylindrical sleeve.

The compactor machine may, for example, have four, six or eight wheels, or a combination of wheels and roller(s).

The compactor machine may be of the deadweight or vibrating type. The machine may be a self-propelling or towed vehicle.

In one embodiment, the compactor machine may have six wheels. This may provide the benefit of increased compounded effort due to a triple rolling effect over the same ground area during one machine pass compared to a conventional four wheel compactor which only has a double rolling effect or in some case only a single rolling effect.

### BRIEF DESCRIPTION OF THE DRAWINGS

Embodiments of the invention will now be described with reference to the accompanying drawings, in which:
Figure 1 shows a side view of an example of a landfill compactor vehicle according to the present invention having six wheels;
Figure 2 shows a plan view of the vehicle of Figure 1;
Figure 3A shows a cross-sectional side view of a front wheel of the vehicle according to a first example;
Figure 3B shows a side view of the wheel shown in Figure 3A;
Figure 4A shows a cross-sectional side view of a rear wheel of the vehicle according to a second example;
Figure 4B shows a side view of the wheel shown in Figure 4A;
Figure 5A shows a cross-sectional side view of a rear wheel of the vehicle according to a third example;
Figure 5B shows a side view of the wheel shown in Figure 5A;
Figure 6 shows a side view of a detachable foot in two halves for the wheel according to another example;
Figure 7A shows a side view of a tip suitable for use on the wheel or detachable feet of any one of Figures 3 to 6;
Figure 7B shows a front view of the tip of Figure 7A;
Figure 7C shows a plan view of the tip of Figures 7A and 7B;
Figure 8 shows a cross-sectional side view of a wheel according to fourth example; and
Figure 9 shows a cross-sectional side view of a wheel according to a fifth example.

### DETAILED DESCRIPTION OF EMBODIMENT(S)

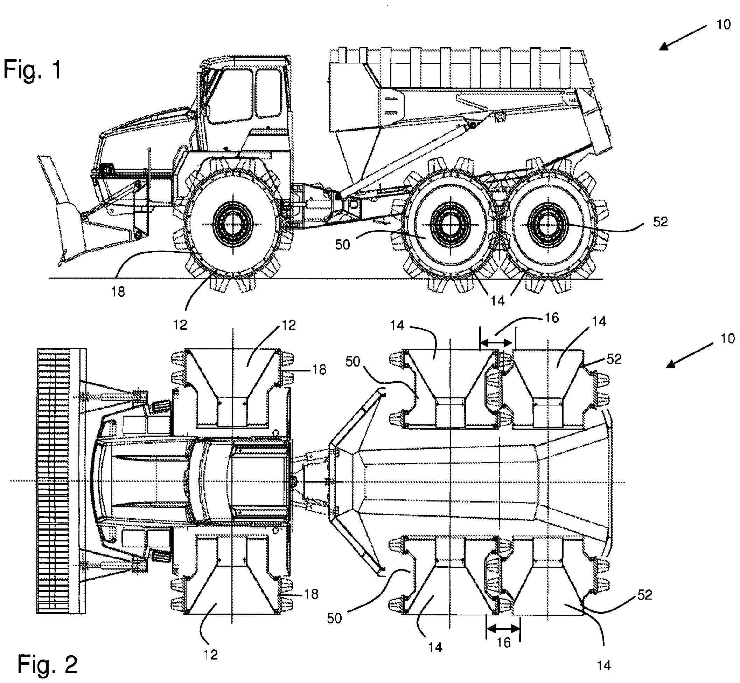

A compactor vehicle according to an embodiment of the present invention, having wheels is indicated generally at 10 in Figure 1. The vehicle 10 in this embodiment is an articulated dump truck (ADT) that has been modified so as to be converted to a compactor. Conversion of the six-wheeled ADT vehicle 10 for compactor use includes not only replacement of the wheels for the wheels described herein, but also the inclusion of a front mounted blade, machine under guards to protect from debris getting tangled around any part of the drive train, etc.

In some embodiments the vehicle may be used to compact refuse for example at a landfill site, and in alternative embodiments the vehicle may be used to compact soil or any other material for compaction.

The wheels or rollers may be applied to a wide variety of compactor machinery or machinery that can be modified to be used as a compactor, including, but not limited to, any of the following vehicle types: towed deadweight single or double drum units; towed deadweight vibrating single or double drum units; self propelled single drum roller deadweight units; self propelled vibrating single drum units; four wheeled self propelled wheel deadweight rollers; self propelled four wheel vibrating rollers; or self propelled multi-wheel vibrating and deadweight units.

In this example, the vehicle 10 has six wheels; two front wheels 12 and four rear wheels 14. As shown in Figures 1 and 2, the rear wheels 14 diametrically overlap 16 so as to remove debris, for example refuse or soil, from the adjacent rear wheel which may otherwise build up. The provision of six wheels compared to four wheels (typical of conventional landfill compactor vehicles) is advantageous because it improves compaction efficiency by increased compounded effort due to a triple rolling effect over the same ground area.

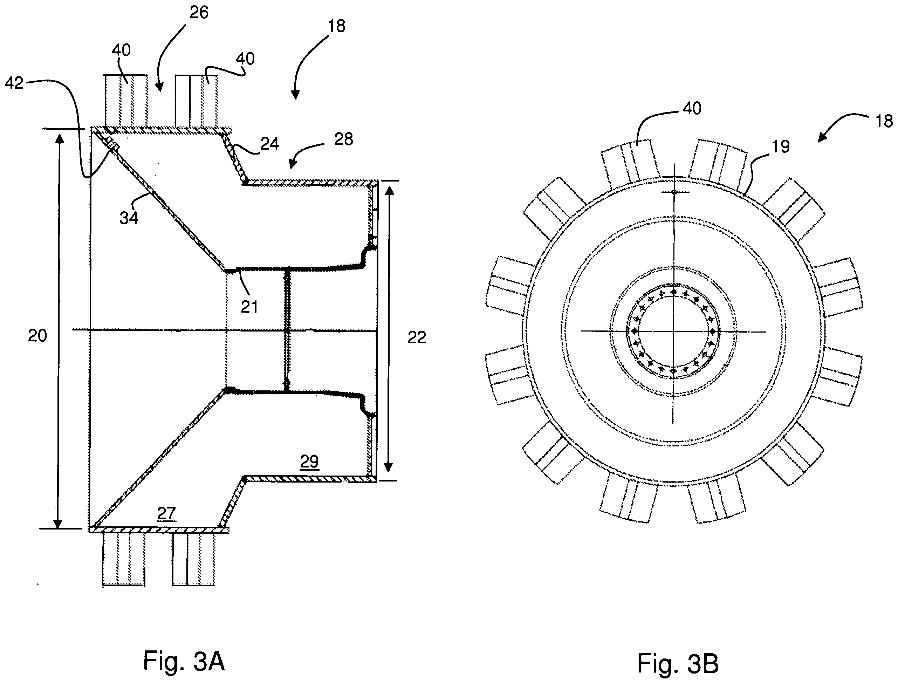

A wheel according to a first example is indicated generally at 18 in Figures 3A and 3B. The wheel 18 includes a drum for contacting material to be compacted, and a centre defining an inner surface 21 for coupling to an axle of the vehicle. The wheel has a welded metallic construction.

The drum is formed such that it has a first cylindrical section 27, a second cylindrical section 29 and a frusto-conical section 24. The frusto-conical section 24 is disposed between and adjacent to the first and second cylindrical sections. The first cylindrical section 27 has a rolling diameter 20 larger than the rolling diameter 22 of the second cylindrical section. The outer surface of the cylindrical sections and frusto-conical section form an outer surface 19 of the drum for contacting material to be compacted, the frusto-conical section forming an inclined surface (or lead angle) from the outer surface 26 of the first cylindrical section to the outer surface 28 of the second cylindrical section. The wheel 18 is hollow so that it can be filled with a ballast fluid between the drum and the centre of the wheel.

The construction of this example is such that when a cross-section of the wheel 18 (as shown in Figure 3A) is viewed from left to right as shown in the figure (but from right to left in alternative examples) the outer surface 19 has a first portion extending in the longitudinal direction with a constant diameter (i.e. the outer surface 26 of the first cylindrical section 27). The diameter of the outer surface 19 then linearly decreases in the longitudinal direction along the inclined portion (i.e. the outer surface of the frusto-conical section 24) to a second portion of constant diameter (i.e. the outer surface 28 of the second cylindrical section 29).

The outward facing side of the wheel 18 is formed with a frusto-conical recess such that it has an inclined face 34 that extends from an edge of the outer surface of the first cylindrical section to an edge of the inner surface 21 of the centre of the wheel 18. In other examples the recess may extend to any position nearer the centre of the wheel than the outer surface, and does not necessarily extend to the inner surface.

A plug 42 is provided in the inclined face 34 of the recess to fill (and drain) the hollow wheel with ballast fluid. The wheel defines a sealable interior volume between the drum and the centre of the wheel. The amount of liquid can be chosen to suit a given application. Preferably, the fluid will be a liquid which will not freeze in cold ambient temperatures. In other examples the plug may be provided in any suitable position, or multiple plugs may be provided.

Tips (teeth) 40 are arranged in two rows around the perimeter of the wheel and extend substantially radially outwardly from the outer surface of the first cylindrical section 27 of the drum. Alternatively, the tips may be inclined (at a small angle) either towards or away from the direction of forward rotation of the wheel, or towards or away from the vehicle body. The tips are of the "sheep's feet" type, but may alternatively take any suitable form. In this example the tips 40 are permanently fixed to the drum, e.g. by welding. Alternatively, the tips may be removably attached to the drum, e.g. by bolting.

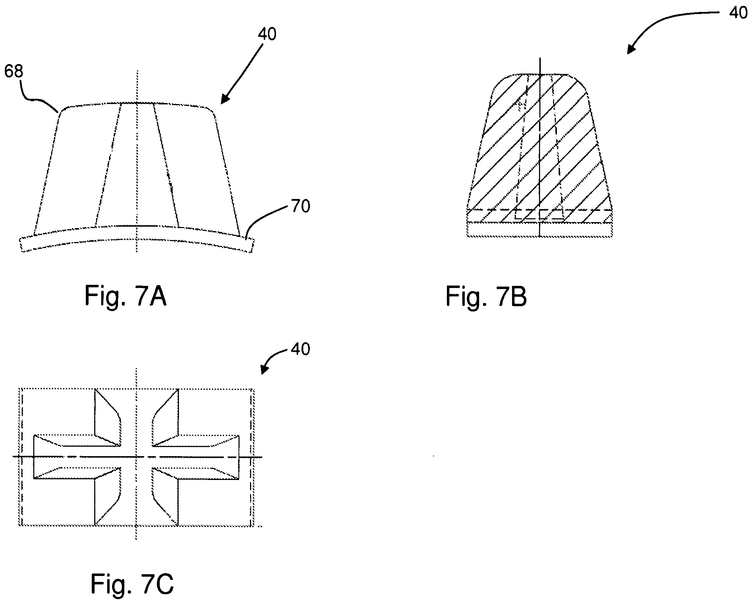

Referring to Figures 7A to 7C, an alternative tip 40b is shown. In this alternative example the tip 40b protrudes from a base 70 that is attachable to a wheel or a further component that is attachable to a wheel, an example of which is described later. The tip 40b is shaped in the form of a cross. The sides of the tip are inclined and the edges 68, that in use initially contact the ground, are chamfered.

In alternative examples the wheel/roller may not comprise tips, in some such cases the exterior surface of the wheel/roller may be corrugated with any suitable additional pattern.

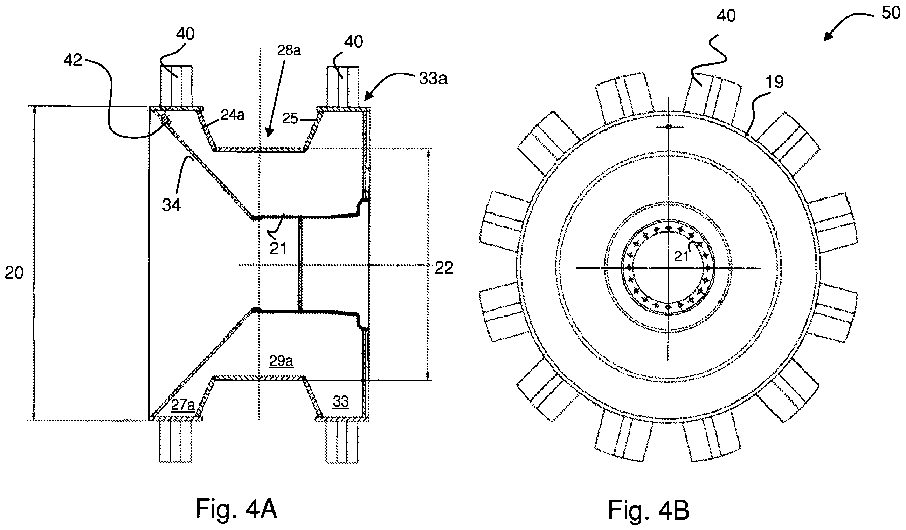

A wheel according to a second example is indicated generally at 50 in Figures 4A and 4B. Only the differences between the wheel 50 and the wheel 18 will be described in the following and like reference numerals have been used to denote like parts.

The drum of the wheel 50 is formed such that it has a first cylindrical section 27a, a second cylindrical section 29a, a third cylindrical section 33 and two frusto-conical sections 24a, 25. The second cylindrical section 29a is positioned between the first and the third cylindrical sections 27a, 33. One of the frusto-conical sections 24a is positioned between and adjacent to the first and second cylindrical sections 27a, 29a and the other frusto-conical section 25 is positioned between and adjacent to the second and third cylindrical sections 29a, 33.

The outer surface of the cylindrical sections and frusto-conical sections form an outer surface 19a of the drum for contacting material to be compacted, the frusto-conical section 24a forming an inclined surface (or lead angle) from the outer surface 26a of the first cylindrical section 27a to the outer surface 28a of the second cylindrical section, and the frusto-conical section 25 forming an inclined surface (or lead angle) from the outer surface 28a of the second cylindrical section 29a to the outer surface 31 of the third cylindrical section 33.

The rolling diameters 20a of the first and the third cylindrical sections are equal and larger than the rolling diameter 22a of the second cylindrical section.

The construction of this example of the wheel is such that when a cross-section of the wheel 50 (as shown in Figure 4A) is viewed from left to right as shown in the figure (but from right to left in alternative examples) the outer surface 19a has a first portion extending in the longitudinal direction with a constant diameter (i.e. the outer surface 26a of the first cylindrical section 27a). The diameter of the outer surface 19a then linearly decreases in the longitudinal direction along a first inclined portion (i.e. the outer surface of the frusto-conical section 24a) to a second portion of constant diameter (i.e. the outer surface 28a of the second cylindrical section 29a). The diameter of the outer surface 19a then linearly increases in the longitudinal direction along a second inclined portion (i.e. the outer surface of the frusto-conical section 25) to a third portion of constant diameter (i.e. the outer surface 31 of the third cylindrical section 33).

In this example the two rows of tips (teeth) 40 are arranged around the perimeter of the wheel with one row extending substantially radially from the outer surface of the first cylindrical section 27a and the other row extending radially from the outer surface of the third cylindrical section 33.

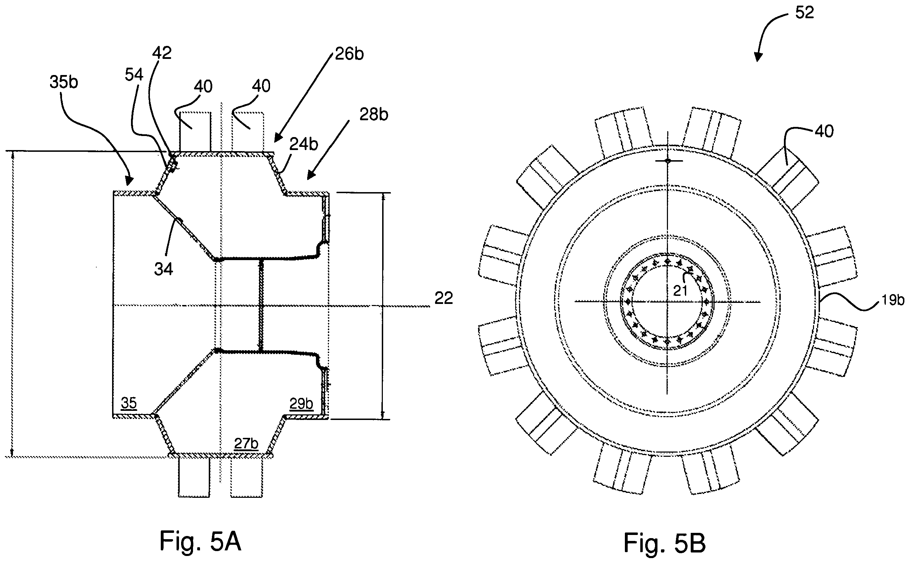

A wheel according to a third example is indicated generally at 52 in Figures 5A and 5B. Only the differences between the wheel 52 and the wheel 18 will be described in the following and like reference numerals have been used to denote like parts.

The drum of the wheel 52 is formed such that it has a first cylindrical section 27b, a second cylindrical section 29b, a third cylindrical section 35 and two frusto-conical sections 24b, 54. One of the frusto-conical sections 54 is positioned between and adjacent to first and third cylindrical sections 27b, 35 and the other frusto-conical section 24b is positioned between and adjacent to the first and second cylindrical sections 27b, 29b.

The rolling diameter 20b of the first cylindrical section 27b is larger than the rolling diameter 22b of the second and third cylindrical sections 29b, 35.

The outer surface of the cylindrical sections and frusto-conical sections form an outer surface 19b of the wheel for contacting material to be compacted. One frusto-conical section 54 forms an inclined surface (or lead angle) from an outer surface 35b of the third cylindrical section 35 to the outer surface 26b of the first cylindrical section 27b, and the other frusto-conical section 24b forms an inclined surface (or lead angle) from the outer surface 26b of the first cylindrical section 27b to the outer surface 28b of the second cylindrical section 29b.

The construction of this example of the wheel is such that when a cross-section of the wheel 52 (as shown in Figure 5A) is viewed from left to right as shown in the figure (but from right to left in alternative examples) the outer surface 19b has a first portion extending in the longitudinal direction with a constant diameter (i.e. the outer surface 35b of the third cylindrical section 35). The diameter of the outer surface 19b then increases linearly in the longitudinal direction along a first inclined portion (i.e. the outer surface of the frusto-conical section 54) to a second portion of constant diameter (i.e. the outer surface 26b of the first cylindrical section 27b). The diameter of the outer surface 19b then linearly decreases in the longitudinal direction along a second inclined portion (i.e. the outer surface of the frusto-conical section 24b) to a third portion of constant diameter (i.e. the outer surface 28b of the second cylindrical section 29b).

In this example the two rows of tips (teeth) 40 are arranged around the perimeter of the wheel and extend substantially radially from the outer surface 26b of the first cylindrical section 27b.

Returning to Figures 1 and 2, it can be seen that the wheels 50, 52 which make up each set of rear wheels 14 of the vehicle 10 are diametrically overlapping. In particular the tips 40 of the wheels 50 diametrically overlap with the tips 40 of the wheels 52. Advantageously such overlap may be used to remove debris (e.g. refuse or soil) build-up from the wheels and therefore alleviates the need for a scraper system to clean the wheels as used on some vehicles of the prior art. As can be seen from Figure 2, the tips 40 of the wheels 52 are arranged to sweep close to the smooth outer surface 28a of the smaller diameter second cylindrical section 29a of the wheels 50. Similarly, the tips 40 of the wheels 50 are arranged to sweep close to the smooth outer surfaces 28b and 35b of the smaller diameter second and third cylindrical sections 29n and 25 of the wheels 52.

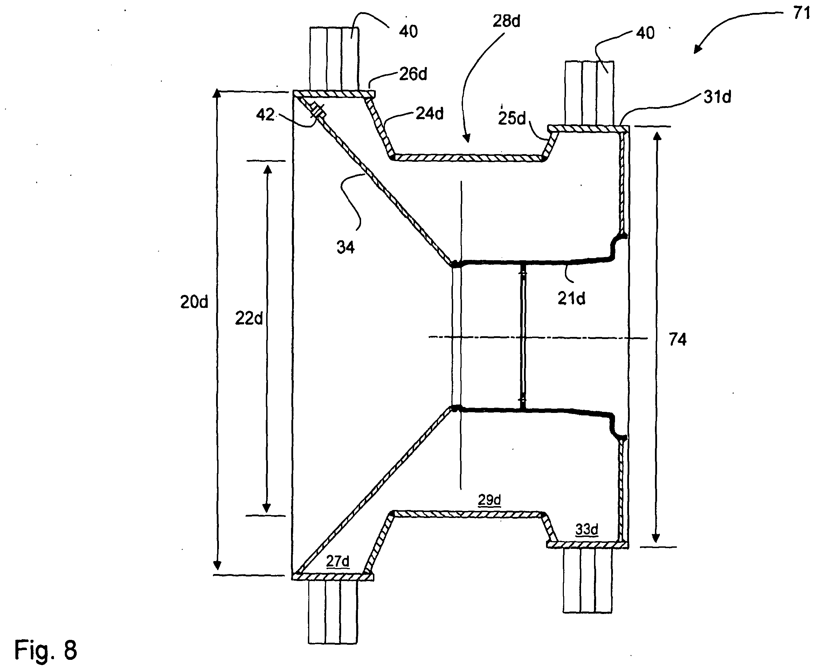

A wheel according to a fourth example is indicated generally at 71 in Figure 8. Only the differences between the wheel 71 and the wheel 18 will be described in the following and like reference numerals have been used to denote like parts.

The drum of the wheel 71 is formed such that it has a first cylindrical section 27d, a second cylindrical section 29d, a third cylindrical section 33d and two frusto-conical sections 24d, 25d. The second cylindrical section 29d is positioned between the first and the third cylindrical sections 27d, 33d. One of the frusto-conical sections 24d is positioned between and adjacent to the first and second cylindrical sections 27d, 29d and the other frusto-conical section 25d is positioned between and adjacent to the second and third cylindrical sections 29d, 33d.

The outer surface of the cylindrical sections and frusto-conical sections form an outer surface of the drum for contacting material to be compacted, the frusto-conical section 24d forming an inclined surface (or lead angle) from the outer surface 26d of the first cylindrical section 27d to the outer surface 28d of the second cylindrical section 29d, and the frusto-conical section 25d forming an inclined surface (or lead angle) from the outer surface 28d of the second cylindrical section 29d to the outer surface 31d of the third cylindrical section 33d.

The rolling diameters 20d of the first cylindrical section is larger than the rolling diameter 74 of the third cylindrical section, and the rolling diameter of the third cylindrical section is larger than the rolling diameter 22d of the second cylindrical section.

The construction of this example of the wheel is such that when a cross-section of the wheel 71 is viewed from left to right as shown in Figure 8 (but from right to left in alternative examples) the outer surface has a first portion extending in the longitudinal direction with a constant diameter (i.e. the outer surface 26d of the first cylindrical section 27d). The diameter of the outer surface then linearly decreases in the longitudinal direction along a first inclined portion (i.e. the outer surface of the frusto-conical section 24d) to a second portion of constant diameter (i.e. the outer surface 28d of the second cylindrical section 29d). The diameter of the outer surface then linearly increases in the longitudinal direction along a second inclined portion (i.e. the outer surface of the frusto-conical section 25d) to a third portion of constant diameter (i.e. the outer surface 31d of the third cylindrical section 33d).

In this example the two rows of tips (teeth) 40 are arranged around the perimeter of the wheel with one row extending substantially radially from the outer surface of the first cylindrical section 27d and the other row extending radially from the outer surface of the third cylindrical section 33d.

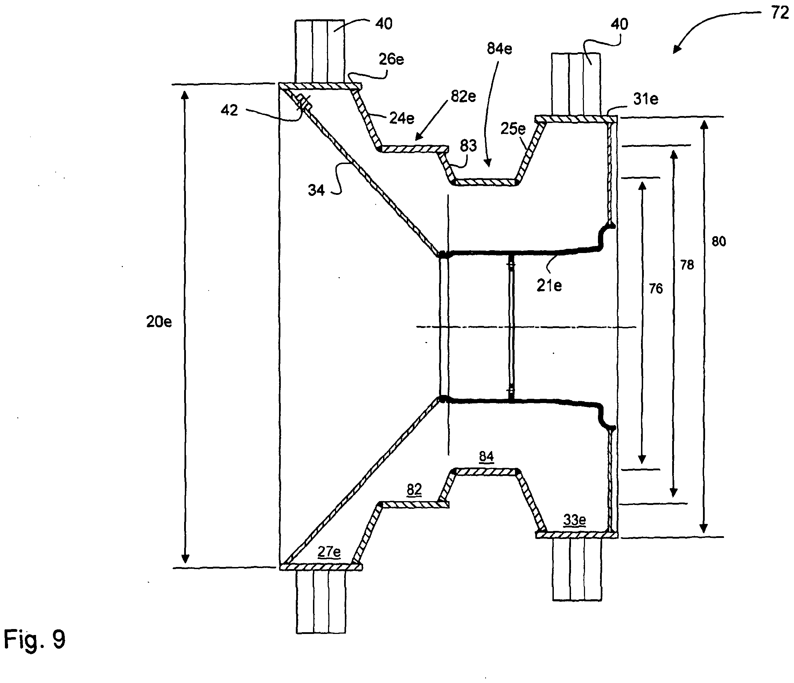

A wheel according to a fifth example is indicated generally at 72 in Figure 9. Only the differences between the wheel 72 and the wheel 18 will be described in the following and like reference numerals have been used to denote like parts.

The drum of the wheel 72 is formed such that it has a first cylindrical section 27e, a second cylindrical section 82, a third cylindrical section 84, and a fourth cylindrical section 33e and three frusto-conical sections 24e, 25e and 83. The second cylindrical section 82 is positioned between the first and the third cylindrical sections 27e, 84, and the third cylindrical section 84 is positioned between the second and fourth cylindrical sections 82 and 33e. One of the frusto-conical sections 24e is positioned between and adjacent to the first and second cylindrical sections 27e, 82, another of the frusto-conical sections 83 is positioned between and adjacent to the second and third cylindrical sections 82, 84, and the other frusto-conical section 25e is positioned between and adjacent to the third and fourth cylindrical sections 84, 33e.

The outer surface of the cylindrical sections and frusto-conical sections form an outer surface of the drum for contacting material to be compacted, the frusto-conical section 24e forming an inclined surface (or lead angle) from the outer surface 26e of the first cylindrical section 27e to the outer surface 82e of the second cylindrical section 82, the frusto-conical section 83 forming an inclined surface (or lead angle) from the outer surface 82e of the second cylindrical section 82 to the outer surface 84e of the third cylindrical section 84, and the frusto-conical section 25e forming an inclined surface (or lead angle) from the outer surface 84e of the third cylindrical section 84 to the outer surface 31 e of the fourth cylindrical section 33e.

The rolling diameters 20e of the first cylindrical section is larger than the rolling diameter 80 of the fourth cylindrical section, the rolling diameter 80 of the fourth cylindrical section is larger than the rolling diameter 78 of the second cylindrical section, and the rolling diameter 78 of the second cylindrical section is larger than the rolling diameter 76 of the third cylindrical section.

The construction of this example of the wheel is such that when a cross-section of the wheel 72 is viewed from left to right as shown in Figure 8 (but from right to left in alternative examples) the outer surface has a first portion extending in the longitudinal direction with a constant diameter (i.e. the outer surface 26e of the first cylindrical section 27e). The diameter of the outer surface then linearly decreases in the longitudinal direction along a first inclined portion (i.e. the outer surface of the frusto-conical section 24e) to a second portion of constant diameter (i.e. the outer surface 82e of the second cylindrical section 82). The diameter of the outer surface then linearly decreases in the longitudinal direction along a second inclined portion (i.e. the outer surface of the frusto-conical section 83) to a second portion of constant diameter (i.e. the outer surface 84e of the third cylindrical section 84). The diameter of the outer surface then linearly increases in the longitudinal direction along a third inclined portion (i.e. the outer surface of the frusto-conical section 25e) to a fourth portion of constant diameter (i.e. the outer surface 31e of the third cylindrical section 33e).

In this example the two rows of tips (teeth) 40 are arranged around the perimeter of the wheel with one row extending substantially radially from the outer surface of the first cylindrical section 27e and the other row extending radially from the outer surface of the fourth cylindrical section 33e.

The previously described examples advantageously provide a wheel having a construction such that the area of contact of the wheel with material to be compacted varies with the depth of penetration of the wheel into said material. The inventors of the present invention have found this to improve the efficiency of compaction. Such a profiled outer surface also means that the wheels apply an appropriate pressure for a given ground hardness without the need to change the wheel.

The ability to change the wheel tips to suit the site condition needs to be performed quickly and at low cost. This is conventionally done by changing the wheels which may involve a contractor stocking different wheels to allow this flexibility.

According to another example, the larger diameter cylindrical surfaces of the wheel may be fitted with a set of interchangeable "feet", which allow different wheel tips to be introduced quickly and cost effectively simply by replacing the wheel feet as opposed to stocking and changing the complete wheel.

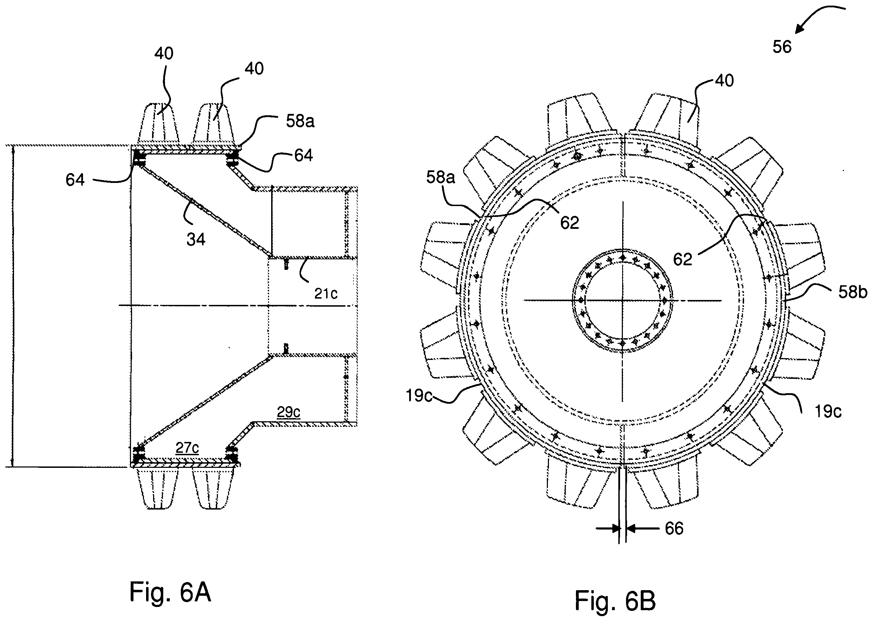

Figure 6A and 6B illustrates an example of a set of "feet" 56 attached to a wheel. The set of feet 56 in this example comprises two similar semi-circular cylindrical sleeve sections 58a, 58b carrying the tips 40. The sleeve sections 58a, 58b have an outer surface 19c for contacting the ground and an inner surface 62 for contact with a smooth cylindrical outer surface of the wheel. As with the wheels of the previous examples, the wheel shown in Figure 6A and 6B has a first cylindrical section 27c and a second cylindrical section 29c, the first cylindrical section 27c having a greater diameter than the second cylindrical section 29c. The sleeve sections 58a, 58b are connected to the first cylindrical section by fasteners 64 spaced around the two circumferential edges of the first cylindrical section. The two sections 58a, 58b spaced apart by a distance 66 that is set so as to permit easy changing of the sleeve sections 58a, 58b.

## Claims

1. A compactor machine comprising a plurality of rigid wheels (50, 52) or rollers mounted on axles, each wheel or roller including a rigid drum for contacting material to be compacted, the drum having a profiled outer surface including a first cylindrical portion (27a, 27b) and a second cylindrical portion (29a, 29b), the first cylindrical portion having a larger rolling diameter than the second cylindrical portion, and an inclined portion (24a, 24b, 25, 54) extending between the first and second cylindrical portions, wherein the largest diameters of the wheels or rollers mounted on adjacent axles spaced apart along the longitudinal direction of the compactor machine are diametrically overlapping.

2. The compactor machine according to claim 1 wherein each wheel (50, 52) or roller further comprises a centre coupled to its axle.

3. The compactor machine according to claim 1 or claim 2 wherein each wheel (50, 52) or roller defines a sealable interior volume for filling with a ballast fluid.

4. The compactor machine according to any preceding claim wherein each wheel (50, 52) or roller has a welded metallic construction.

5. The compactor machine according to any preceding claim wherein the outer surface of the drum includes a plurality of first and/or second cylindrical portions (27a, 27b), with a respective inclined portion (24a, 24b, 25, 54) extending between each first and second cylindrical portions.

6. The compactor machine according to any preceding claim further comprising tips (40) extending substantially radially from the first cylindrical portion (27a) of the drum.

7. The compactor machine according to claim 6 wherein the tips (40) are permanently fixed to the drum.

8. The compactor machine according to claim 6 wherein the tips (40) are removably attached to the drum.

9. The compactor machine according to claim 6 further comprising a cylindrical sleeve (58a, 58b) carrying the tips (40), wherein the sleeve is attached to the first cylindrical portion of the drum.

10. The compactor machine according to claim 9 wherein the sleeve (58a, 58b) is interchangeable upon the drum with another sleeve (58a, 58b) carrying tips selected according to the material to be compacted.

11. The compactor machine according to claim 9 or 10 wherein the sleeve (58a, 58b) comprises two or more sections which fit together to form the complete cylindrical sleeve.

12. A compactor machine according to any preceding claim which is of the deadweight or vibrating type.

13. A compactor machine according to any preceding claim which is a self-propelling or towed vehicle.

## Patentansprüche

1. Kompaktiermaschine, mehrere auf Achsen montierte, starre Räder (50, 52) oder Rollen umfassend, wobei jede(s) Rad oder Rolle eine starre Trommel zur Berührung mit zu kompaktierendem Material aufweist, wobei die Trommel eine profilierte Außenfläche hat, die einen ersten zylindrischen Abschnitt (27a, 27b) und einen zweiten zylindrischen Abschnitt (29a, 29b) umfasst, wobei der erste zylindrische Abschnitt einen größeren Rollendurchmesser hat, als der zweite zylindrische Abschnitt, sowie einen geneigten Abschnitt (24a, 24b, 25, 54), der sich zwischen dem ersten und dem zweiten zylindrischen Abschnitt erstreckt, wobei die größten Durchmesser der Räder oder Rollen, die auf benachbarten Achsen angebracht sind, die in einer Längsrichtung der Kompaktiermaschine voneinander beabstandet sind, sich diametral überlappen.

2. Kompaktiermaschine nach Patentanspruch 1, in der jede(s) Rad (50, 52) oder Rolle außerdem über eine an seine/ihre Achse gekoppelte Mitte verfügt.

3. Kompaktiermaschine nach Patentanspruch 1 oder Patentanspruch 2, in der jede(s) Rad (50, 52) oder Rolle einen dicht verschließbaren Innenraum zur Füllung mit einer Ballastflüssigkeit umschließt.

4. Kompaktiermaschine nach irgendeinem der vorangehenden Patentansprüche, in der jede(s) Rad (50, 52) oder Rolle über eine geschweißte Metallkonstruktion verfügt.

5. Kompaktiermaschine nach irgendeinem der vorangehenden Patentansprüche, in der die Außenfläche der Trommel über mehrere erste und/oder zweite zylindrische Abschnitte (27a, 27b) jeweils mit einem geneigten Abschnitt (24a, 24b, 25, 54), der sich zwischen jedem ersten und zweiten zylindrischen Abschnitt erstreckt, verfügt.

6. Kompaktiermaschine nach irgendeinem der vorangehenden Patentansprüche, außerdem Spitzen (40) aufweisend, die im Wesentlichen radial vom ersten zylindrischen Abschnitt (27a) der Trommel abstehen.

7. Kompaktiermaschine nach Patentanspruch 6, in der die Spitzen (40) an der Trommel bleibend befestigt sind.

8. Kompaktiermaschine nach Patentanspruch 6, in der die Spitzen (40) an der Trommel abnehmbar befestigt sind.

9. Kompaktiermaschine nach Patentanspruch 6, außerdem eine zylindrische Hülse (58a, 58b) aufweisend, die die Spitzen (40) trägt, wobei die Hülse am ersten zylindrischen Abschnitt der Trommel angebracht ist.

10. Kompaktiermaschine nach Patentanspruch 9, in der die Hülse (58a, 58b) an der Trommel mit einer anderen Hülse (58a, 58b) austauschbar ist, die Spitzen aufweist, die nach dem zu kompaktierenden Material ausgewählt werden.

11. Kompaktiermaschine nach Patentanspruch 9 oder 10, in der die Hülse (58a, 58b) zwei oder mehr Teilstücke umfasst, die zusammenpassen, um die vollständige zylindrische Hülse zu bilden.

12. Kompaktiermaschine nach irgendeinem der vorangehenden Patentansprüche, die vom Eigengewichts- oder Vibrationstyp ist.

13. Kompaktiermaschine nach irgendeinem der vorangehenden Patentansprüche, die ein Fahrzeug mit Eigenantrieb oder ein gezogenes Fahrzeug ist.

## Revendications

1. Machine à compacter comprenant un ensemble de roues (50, 52), ou rouleaux rigides montés sur des essieux, chaque roue ou chaque rouleau comportant un tambour rigide destiné à venir en contact avec les matières à compacter, le tambour ayant une surface externe profilée comprenant une première partie cylindrique (27a, 27b) et une seconde partie cylindrique (29a, 29b), la première partie cylindrique ayant un diamètre de roulement supérieur à celui de la seconde partie cylindrique, et une partie inclinée (24a, 24b , 25, 54) s'étendant entre la première partie cylindrique et la seconde partie cylindrique, les plus grands diamètres des roues ou des rouleaux montés sur des essieux adjacents situés à distance le long de la direction longitudinale de la machine à compacter se chevauchant diamétralement.

2. Machine à compacter conforme à la revendication 1,
dans laquelle chaque roue (50, 52) ou chaque rouleau comporte en outre un centre couplé à son essieu.

3. Machine à compacter conforme à la revendication 1 ou à la revendication 2,
dans laquelle chaque roue (50, 52) ou chaque rouleau définit un volume interne pouvant être fermé hermétiquement destiné à être rempli par un fluide formant ballast.

4. Machine à compacter conforme à l'une quelconque des revendications précédentes, dans laquelle chaque roue (50, 52) ou chaque rouleau est un élément de construction métallique soudé.

5. Machine à compacter conforme à l'une quelconque des revendications précédentes, dans laquelle la surface externe du tambour comprend un ensemble de premières et/ou de secondes parties cylindriques (27a, 27b), une partie inclinée respective (24a, 24b, 25, 54) s'étendant entre chaque première et chaque seconde partie cylindrique.

6. Machine à compacter conforme à l'une quelconque des revendications précédentes, comprenant en outre des embouts (40) s'étendant essentiellement radialement à partir de la première partie cylindrique (27a) du tambour.

7. Machine à compacter conforme à la revendication 6,
dans laquelle les embouts (40) sont fixés en permanence au tambour.

8. Machine à compacter conforme à la revendication 6,
dans laquelle les embouts (40) sont fixés au tambour de façon amovible.

9. Machine à compacter conforme à la revendication 6,
comprenant en outre un manchon cylindrique (58a, 58b) portant les embouts (40), ce manchon étant fixé à la première partie cylindrique du tambour.

10. Machine à compacter conforme à la revendication 9,
dans laquelle le manchon (58a, 58b) peut être échangé sur le tambour avec un autre manchon (58a, 58b) portant des embouts sélectionnés selon les matières à compacter.

11. Machine à compacter conforme à la revendication 9 ou 10,
dans laquelle le manchon (58a, 58b) comprend au moins deux sections qui s'adaptent étroitement l'une à l'autre pour former le manchon cylindrique complet.

12. Machine à compacter conforme à l'une quelconque des revendications précédentes, constituée par une machine de type à balourd ou de type vibrant.

13. Machine à compacter conforme à l'une des revendications précédentes, constituée par un véhicule automoteur ou remorqué.
